# EUROPÄISCHE PATENTSCHRIFT

(11) **EP 0 366 910 B1**
(45) Veröffentlichungstag und Bekanntmachung des Hinweises auf die Patenterteilung: **29.12.1993**
(21) Anmeldenummer: 89116843.7
(22) Anmeldetag: 12.09.1989
(51) Int. Cl.: F16C 3/10

(54) **Aufgebaute Kurbelwelle**
Assembled crankshaft
Vilebrequin assemblé

(30) Priorität: 03.11.1988 DE 3837294
(43) Veröffentlichungstag der Anmeldung: 09.05.1990
(73) Patentinhaber: Emitec Gesellschaft für Emissionstechnologie mbH, 53797 Lohmar (DE)
(72) Erfinder: Swars, Helmut, D-5060 Bergisch Gladbach 1 (DE)
(74) Vertreter: COHAUSZ HASE DAWIDOWICZ & PARTNER

(56) Entgegenhaltungen:
- EP-A- 0 315 136
- WO-A-89/02037
- FR-A- 2 566 484
- FR-A- 2 622 941

## Beschreibung

Die Erfindung betrifft eine aufgebaute Kurbelwelle, deren Kurbelwangen an beiden Seiten mit jeweils einem Teil eines anschließenden Zapfens einstückig verbunden sind, wobei diese Teile als Hohlzapfen ausgebildet sind. Sie betrifft darüber hinaus sinngemäß auch andere aus einzelnen Abschnitten aufgebaute Wellen mit Verbindungsbereichen vergleichbarer Geometrie, beispielsweise aus Längsabschnitten aufgebaute Getriebewellen oder aufgebaute Nockenwellen.

Aus der älteren, aber nicht vorveröffentlichten EP-A-0315 136 ist eine aufgebaute Kurbelwelle bekannt, deren Kurbelwangen an beiden Seiten mit jeweils einem Teil eines anschließenden Zapfens einstückig verbunden sind. Die Zapfen sind als Hohlzapfen ausgebildet, wobei die gemeinsam einen Wellenzapfen bildenden Teile jeweils benachbarter Kurbelwangen zumindest teilweise im Durchmesser abgestuft und ineinandergesteckt sind und zwischen beiden Teilen eine torsionsfeste Verbindung besteht.

Der vorliegenden Erfindung liegt die Aufgabe zugrunde, eine aufgebaute Welle der genannten Art, insbesondere eine Kurbelwelle dahingehend zu verbessern, daß bei einfacher Konstruktion ein verbesserter Kraftschluß zwischen den mit den Wangen verbundenen Zapfenteilen zustande kommt. Die Lösung hierfür besteht darin, daß die gemeinsam einen Wellenzapfen bildenden Teile jeweils benachbarter Kurbelwangen zumindest teilweise im Durchmesser abgestuft und ineinander gesteckt sind, wobei zwischen beiden eine torsionsfeste, nämlich kraftschlüssige oder stoffschlüssige Verbindung besteht. Die hierdurch beschriebene Ausgestaltung der Zapfenteile ermöglicht zunächst eine Vereinfachung der Konstruktion, da gegebenenfalls auf Zusatzteile, insbesondere eine besondere eingeschobene Hülse, verzichtet werden kann. Bei vorgegebenem Zapfenaußendurchmesser ist hiermit eine Vergrößerung der Verbindungsmantelfläche möglich. Anders als bei den bekannten Verbindungen, bei denen am Stoß der Wellenhälften ausschließlich die Verbindungshülse torsionsbelastet ist, ist hier durch die Ausformung von Konusflächen die Möglichkeit gegeben, eine Unstetigkeit solcher Art zu vermeiden.

Durch unterschiedliche Materialeigenschaften der ineinander zu steckenden Teile, wobei z.B. das äußere Teil einen höhere Streckgrenze als das innere Teil aufweist kann die kraftschlüssige Verbindung durch inneres Aufweiten unmittelbar zwischen einstückig mit den jeweils benachbarten Kurbelwangen verbundenen Teilen hergestellt werden.

Ungeachtet der vorstehend genannten Vorteile ist nach einer günstigen Weiterbildung vorgesehen, daß in die beiden ineinander gesteckten Teile eine Verbindungshülse passend eingesteckt ist. Die Verbindung erhält hierdurch einen dreischichtigen Aufbau, wodurch eine zweite Mantelfläche entsteht, in der eine kraftschlüssige Verbindung hergestellt wird. Voraussetzung für ein Herstellen der Verbindung durch inneres Aufweiten ist die nach außen zunehmende Streckgrenze der drei Schichten, wobei die Streckgrenze der Verbindungshülse geringer als die des inneren Teils ist, wobei zumindest diese Hülse über ihre Elastizitätsgrenze hinaus umgeformt und das äußere Teil rein elastisch verformt wird, während es zur Erzielung der erforderlichen Vorspannung zwischen den Schichten unerheblich ist, ob die mittlere Schicht ebenfalls bereits mit der inneren Schicht über die Elastizitätsgrenze hinaus umgeformt ist oder wie die äußere Schicht ebenfalls im Bereich rein elastischer Verformung bleibt. Durch entsprechende Aufteilung der Wandstärken kann der für die Verbindung günstigste Spannungszustand eingestellt werden.

In einer weiteren günstigen Weiterbildung ist auf die beiden ineinander gesteckten Teile eine Lagerhülse passend aufgesteckt, deren Streckgrenze höher ist als der des äußeren Teils, wobei zumindest das innere Teil über die Elastizitätsgrenze hinaus umgeformt ist und die Lagerhülse rein elastisch verformt ist. Auch durch diese Ausgestaltung kann ein Aufbau des Verbindungsbereichs in drei Schichten erzielt werden, wobei sinngemäß das gleiche gilt wie vorher erläutert, mit dem besonderen Vorteil, daß die Lagerhülse aus Kugellagerstahl oder dergleichen mit besonders guten Lagereigenschaften unabhängig vom Material der Kurbelwangen ausgewählt werden kann. Eine insgesamt geringere Wandstärke ist durch eine maximale Streckgrenze der äußersten Hülse möglich. Die genannte Weiterbildung kann jedoch auch in Verbindung mit der eingeschobenen Verbindungshülse zur Anwendung kommen, wodurch sich ein vierschichtiger Aufbau ergibt und die kraftschlüssige Verbindung auf drei ineinanderliegende Mantelflächen aufgeteilt ist.

Da die Verbindungsbereiche im bevorzugten Anwendungsfall bei Kurbelwellen neben den Torsionskräften umlaufende Biegebelastung, ist eine sichere Verbindung herzustellen, wobei die großen Verbindungsbereiche von Vorteil sind und weitere Verbesserungen durch sorgfältige Bearbeitung und Anpassung der Oberflächen erzielt werden können, die insbesondere zur Erzeugung einer stoffschlüssigen Verbindung metallisch blank gemacht werden können oder bei denen dies durch pulsende Druckbelastung beim Aufweiten herbeigeführt werden kann.

Insbesondere durch die Verwendung der gesonderten Lagerhülsen kann der bezüglich Kosten, Gewicht oder Festigkeit geeignete Werkstoff für die Wangen mit den daran angeschlossenen Zapfen gewählt werden, wobei diese geschmiedet, gegossen oder gesintert werden können.

Besondere Bedeutung kommt der Ausgestaltung der Übergänge von den Zapfenteilen zu den Kurbelwangen zu, die sorgfältig und mit großen Radien gerundet sein sollten. Bei der Verwendung zusätzlicher Verbindungshülsen können in bevorzugter Weise ringförmige Schmierölräume in der Kurbelwelle hergestellt werden.

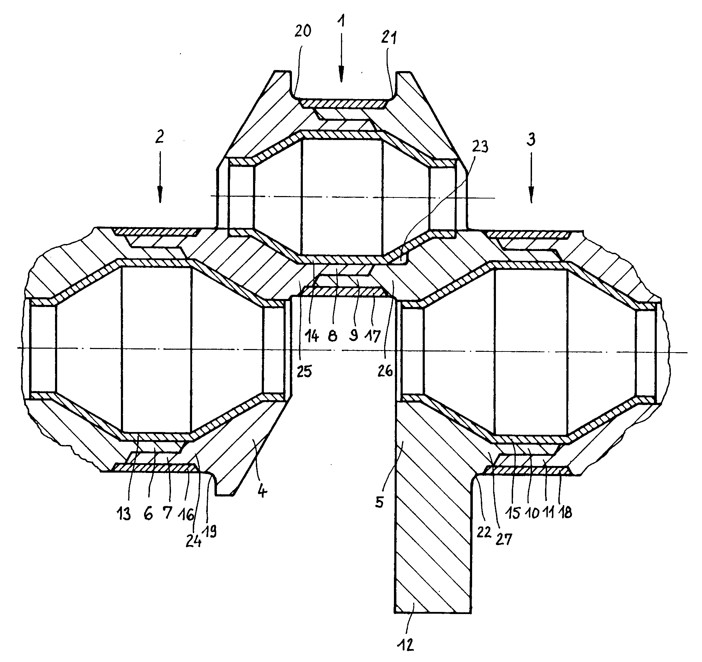

Ein bevorzugtes Ausführungsbeispiel der Erfindung ist in der Zeichnung dargestellt, die einen Abschnitt einer Kurbelwelle mit zwei Grundzapfen und einem Hubzapfen zeigt, wobei jeder der Zapfen aus ineinandergeschobenen, mit den benachbarten Wangen verbundenen Teilen besteht.

Im einzelnen sind an der erfindungsgemäßen Kurbelwelle der Hubzapfen 1 und die Haupt- oder Lagerzapfen 2, 3 dargestellt, zwischen denen die Kurbelwangen 4 und 5 die Übergänge bilden. Die Kurbelwange 5 unterscheidet sich von der Kurbelwange 4 durch ein einstückig angeformtes Gegengewicht 12. An die Kurbelwange 4 schließt sich links eine außenliegende Hülse 7 des Grundzapfens 2 und rechts eine innenliegende Hülse 8 des Hubzapfens 1 an. An die Kurbelwange 5 schließt sich links eine außenliegende Hülse 9 des zuletzt genannten Hubzapfens 1 und rechts eine innenliegende Hülse 10 des Grundzapfens 3 an. In die vorher genannte Hülse 7 ist eine weitere Hülse 6 einer weiteren, nur teilweise dargestellten Kurbelwange eingesteckt, auf die zuletzt genannte innen liegende Hülse 10 ist eine weitere Hülse 11 einer weiteren, ebenfalls nicht dargestellen Kurbelwange aufgeschoben.

Von den vorstehend genannten Zapfenteilen (Hülsenansätzen) 6, 7; 8, 9; 10, 11; weist jeweils das erste innenliegende eine geringere Streckgrenze als das zweite außenliegende auf, wobei zwischen beiden eine kraftschlüssige Verbindung besteht. In die ineinandergeschobenen Zapfenteile ist jeweils eine innere Hülse 13, 14, 15 eingeschoben, die aus Gründen der besseren Abdichtbarkeit und aus Gründen der größeren Festigkeit im Bereich der Kurbelwangen zu beiden Enden hin im Durchmesser reduziert und auch exzentrisch gegenüber dem Mittelabschnitt ausgestaltet sein kann. Rein zylindrische Hülsen sind jedoch in gleicher Weise geeignet. Die Hülsen 13, 14, 15 bestehen jeweils aus einem Werkstoff mit einer geringeren Streckgrenze als das jeweilige innenliegende Zapfenteil 6, 8, 10. Auf die ineinander gesteckten Zapfenteile 6, 7; 8, 9; 10, 11 sind weiterhin Lagerhülsen 16, 17, 18 aufgeschoben, die jeweils eine größere Streckgrenze als das jeweils außenliegende Zapfenteil 7, 9, 11 aufweisen. Sie können beispielsweise aus Kugellagerstahl oder einem Werkstoff mit maximaler Streckgrenze bestehen, während die innenliegenden Hülsen keinen besonderen Festigkeitseigenschaften, mit Ausnahme der leichten Plastifizierbarkeit, genügen müssen. Zur Vermeidung von Festigkeitssprüngen sind die Zapfenteile an ihren Enden jeweils konisch ausgebildet, darüberhinaus sind die Übergänge von den mit verstärkten Basisabschnitten 24, 25, 26, 27 versehenen Zapfenteilen zu den Kurbelwangen mit Rundungen 19, 20, 21, 22 versehen. Durch die Abweichung der Wangenform von der Hülsenform ist ein Schmierölraum 23 zwischen der Hülse 14 und der Wange 5 ausgebildet.

Die Übertragbarkeit des Erfindungsgegenstandes auf Getriebewellen wird deutlich, wenn die mögliche Abwandlung der Kurbelwange mit dem Gegengewicht zu einem Zahnrad betrachtet wird, wobei sich die beiderseitigen Zapfen-oder Wellenansätze koaxial anschließen würden.

## Patentansprüche

1. Aufgebaute Kurbelwelle, deren Kurbelwangen (4,5) an beiden Seiten mit jeweils einem Teil (7,8,9,10) eines anschließenden Zapfens (1,2,3) einstückig verbunden sind, wobei
a) diese Teile (6,7;8,9;10,11) als Hohlzapfen (1,2,3) ausgebildet sind und
b) die gemeinsam einen Wellenzapfen (1,2,3) bildenden Teile (6,7;8,9;10,11) jeweils benachbarter Kurbelwangen (4,5), zumindest teilweise im Durchmesser abgestuft und ineinandergesteckt sind und
c) zwischen beiden Teilen (6,7;8,9;10,11) eine torsionsfeste Verbindung besteht,
wobei
d) ein jeweils äußeres Teil (7,9,11,16,17,18) eine höhere Streckgrenze als ein jeweils inneres Teil (6,8,10,13,14,15) aufweist und
e) das jeweils innere Teil (6,8,10,13,14,15) über die Elastizitätsgrenze hinaus umgeformt und das jeweils äußere Teil (7,9,11,16,17,18) dabei rein elastisch verformt ist.

2. Kurbelwelle nach Anspruch 1,
wobei
in die beiden ineinandergesteckten Teile (6,7;8,9;10,11) eine Verbindungshülse (13,14,15) passend eingesteckt ist, deren Streckgrenze geringer als der des inneren Teils (6,8,10) ist, und daß auch die Verbindungshülse (13,14,15) über ihre Elastizitätsgrenze hinaus umgeformt ist.

3. Kurbelwelle nach Anspruch 1,
wobei
auf die beiden ineinandergesteckten Teile (6, 7; 8, 9; 10, 11) eine Lagerhülse (16; 17; 18) passend aufgesteckt ist, deren Streckgrenze höher als der des äußeren Teils (7; 9; 11) ist, wobei zumindest das innere Teil (6, 8, 10) über die Elastizitätsgrenze hinaus umgeformt und die Lagerhülse (16; 17; 18) rein elastisch verformt ist.

4. Kurbelwelle nach einem der Ansprüche 1 bis 3,
wobei
das jeweils innen liegende Teil (6; 8; 10) an einer Kurbelwange vor dem Herstellen der kraftschlüssigen Verbindung weichgeglüht ist.

5. Kurbelwelle nach einem der Ansprüche 1 bis 4,
wobei
das jeweils außen liegende Teil (7; 9; 11) an einer Kurbelwange vor dem Herstellen der kraftschlüssigen Verbindung vergütet ist.

6. Kurbelwelle nach einem der Ansprüche 1 bis 5,
wobei
die ineinander gesteckten Teile (8, 9; 6, 7; 10, 11) Zylinderhülsen abgestuften Durchmessers sind.

7. Kurbelwelle nach einem der Ansprüche 1 bis 5,
wobei
die ineinander gesteckten Teile ( 8, 9; 6, 7; 10, 11) mit Konusflächen ineinandergreifen.

8. Kurbelwelle nach einem der Ansprüche 1 bis 7,
wobei
an die ineinander gesteckten Teile (8, 9; 6, 7; 10, 11) der Zapfen (1; 2; 3) jeweils zu den Kurbelwangen (4, 5) hin Basisbereiche (24, 25, 26, 27) von der Wandstärke der miteinander verbundenen Teile insgesamt anschließen.

9. Kurbelwelle nach Anspruch 8,
wobei
die Basisbereiche (24, 25, 26, 27) innen und/oder außen mit Rundungen (19, 20, 21, 22) in die Kurbelwangen (4, 5) übergehen.

10. Kurbelwelle nach einem der Ansprüche 2 bis 9,
wobei
die Verbindungshülsen (13, 14, 15) aus Stahl geringer Streckgrenze, aus Buntmetall oder Leichtmetall bestehen.

11. Kurbelwelle nach einem der Ansprüche 2 bis 10,
wobei
die Verbindungshülsen (13, 14, 15) mehrere - gegebenenfalls exzentrisch gegeneinander versetzte - nach außen im Durchmesser abgestufte Zylinderabschnitte aufweisen.

12. Kurbelwelle nach einem der Ansprüche 3 bis 11,
wobei
die Lagerhülsen (16, 17, 18) aus Kugellagerstahl oder dergleichen mit einer größtmöglichen Streckgrenze bestehen.

## Claims

1. An assembled crankshaft, the side plates (4, 5) of which crank are each joined integrally on either side to a part (7, 8, 9, 10) of a connecting journal (1, 2, 3), wherein
a) these parts (6, 7; 8, 9; 10, 11) are in the form of hollow journals (1, 2, 3) and
b) the parts (6, 7; 8, 9; 10, 11) of respectively adjacent crank side plates (4, 5) which jointly form a shaft journal (1, 2, 3) are at least partly stepped in diameter and engaged into one another, and
c) a torsion-resistant connection exists between the two parts (6, 7; 8, 9; 10, 11), wherein
d) a respective outer Part (7, 9, 11, 16, 17, 18) has a greater yield strength than a respective inner part (6, 8, 10, 13, 14, 15), and
e) the respective inner part (6, 8, 10, 13, 14, 15) is re-shaped beyond the elastic limit and the respective outer part (7, 9, 11, 16, 17, 18) is deformed in a purely elastic manner.

2. A crankshaft according to Claim 1,
wherein a connecting sleeve (13, 14, 15) engages so that it fits inside the two mutually engaging parts (6, 7; 8, 9; 10, 11), the yield strength of which connecting sleeve is less than that of the inner part (6, 8, 10), and that the connecting sleeve (13, 14, 15) is re-shaped beyond its elastic limit.

3. A crankshaft according to Claim 1,
wherein a mounting sleeve (16; 17; 18) is placed so that it fits over the two mutually engaged parts (6, 7; 8, 9; 10, 11), the yield strength of which mounting sleeve is greater than that of the outer part (7; 9; 11), wherein at least the inner part (6, 8, 10) is re-shaped beyond the elastic limit and the mounting sleeve (16; 17; 18) is deformed in a purely elastic manner.

4. A crankshaft according to one of Claims 1 to 3,
wherein the respectively inwardly disposed part (6; 8; 10) of a crank side plate is brought to white heat before the form-locking connection is made.

5. A crankshaft according to one of Claims 1 to 4,
wherein the respective outwardly disposed part (7; 9; 11) of a crank side plate is heat-treated before the form-locking connection is made.

6. A crankshaft according to one of Claims 1 to 5,
wherein the mutually engaged parts (8, 9; 6, 7; 10, 11) are cylindrical sleeves with stepped diameters.

7. A crankshaft according to one of Claims 1 to 5,
wherein the mutually engaged parts (8, 9; 6, 7; 10, 11) with cone surfaces engage into each other.

8. A crankshaft according to one of Claims 1 to 7,
wherein joined as a whole to the mutually engaged parts (8, 9; 6, 7; 10, 11) of the journals (1; 2; 3), towards the crank side plates (4, 5), are base regions (24, 25, 26, 27) formed by the wall thickness of the mutually joined parts.

9. A crankshaft according to Claim 8,
wherein the base regions (24, 25, 26, 27) make transitions, on the inside and/or outside, by way of rounded regions (19, 20, 21, 22), into the crank side plates (4, 5).

10. A crankshaft according to one of Claims 2 to 9,
wherein the connecting sleeves (13, 14, 15) made of a steel of lower yield strength are made of nonferrous metal or light metal.

11. A crankshaft according to one of Claims 2 to 10,
wherein the connecting sleeves (13, 14, 15) have a plurality of cylinder sections which are stepped outwardly in diameter - and possibly offset eccentrically to one another -.

12. A crankshaft according to one of Claims 3 to 11,
wherein the mounting sleeves (16, 17, 18) are made of ball-bearing steel, or the like, with maximum possible yield strength.

## Revendications

1. Vilebrequin assemblé, dont les bras de manivelle (4, 5) sont reliés monobloc de part et d'autre respectivement avec une partie (7, 8, 9, 10) d'un maneton (1, 2, 3) attenant, dans lequel :
(a) ces parties (6, 7 ; 8, 9 ; 10, 11) sont réalisées sous forme de manetons creux (1, 2, 3),
et
(b) les parties (6, 7 ; 8, 9 ; 10, 11) constituant ensemble un maneton de vilebrequin ((1, 2, 3) sont emboîtées l'une dans l'autre et ont des diamètres au moins partiellement étagés,
et
(c) une liaison résistante à la torsion est prévue entre deux parties (6, 7 ; 8, 9 ; 10, 11),
dans lequel :
(d) une partie extérieure (7, 9, 11, 16, 17, 18) respective présente une limite à l'allongement supérieure à celle d'une partie intérieure (6, 8, 10, 13, 14, 15) respective,
et
(e) la partie intérieure (6, 8, 10, 13, 14, 15) respective évolue vers l'extérieur au-dessus de la limite d'élasticité et la partie extérieure (7, 9, 11, 16, 17, 18) respective est corrélativement déformée de façon parfaitement élastique.

2. Vilebrequin selon la revendication 1,
dans lequel est insérée avec ajustement dans les deux parties (6, 7 ; 8, 9 ; 10, 11) emboîtées l'une dans l'autre une douille de liaison (13, 14, 15) dont la limite à l'allongement est moindre que celle de la partie intérieure (6, 8, 10), et la douille de liaison (13, 14, 15) évolue aussi vers l'extérieur au-dessus de sa limite d'élasticité.

3. Vilebrequin selon la revendication 1,
dans lequel est insérée avec ajustement sur les deux parties (6, 7 ; 8, 9 ; 10, 11) emboîtées l'une dans l'autre une douille de palier (16 ; 17 ; 18) dont la limite à l'allongement est supérieure à celle de la partie extérieure (7 ; 9 ; 11), dans lequel au moins la partie intérieure (6, 8, 10) évolue vers l'intérieur au-dessus de la limite d'élasticité et la douille de palier (16 ; 17 ; 18) est déformée de façon parfaitement élastique.

4. Vilebrequin selon l'une des revendications 1 à 3,
dans lequel la partie respective s'étendant vers l'intérieur (6 ; 8 ; 10) d'un bras de manivelle est recuite avant réalisation de la liaison ferme.

5. Vilebrequin selon l'une des revendications 1 à 4,
dans lequel la partie respective s'étendant vers l'extérieur (7 ; 9 ; 11) d'un bras de manivelle est traitée avant réalisation de la liaison ferme.

6. Vilebrequin selon l'une des revendications 1 à 5,
dans lequel les parties (8, 9 ; 6, 7 ; 10, 11) emboîtées l'une dans l'autre sont des manchons cylindriques de diamètres étagés.

7. Vilebrequin selon l'une des revendications 1 à 5,
dans lequel les parties (8, 9 ; 6, 7 ; 10, 11) emboîtées l'une dans l'autre s'assemblent l'une à l'autre par des surfaces coniques.

8. Vilebrequin selon l'une des revendications 1 à 7,
dans lequel, sur les parties (8, 9 ; 6, 7 ; 10, 11) emboîtées l'une dans l'autre des manetons (1 ; 2 ; 3), se rattachent respectivement aux bras de manivelle (4, 5) des régions de base (24, 25, 26, 27) des épaisseurs de paroi des parties reliées entre elles.

9. Vilebrequin selon la revendication 8,
dans lequel les régions de base (24, 25, 26, 27) se raccordent aux bras de manivelle vers l'intérieur et/ou vers l'extérieur avec des arrondis (19, 20, 21, 22).

10. Vilebrequin selon l'une des revendications 2 à 9,
dans lequel les douilles de liaison (13, 14, 15) sont formées à partir d'un acier à faible résistance à l'allongement, d'un métal non ferreux ou d'un métal léger.

11. Vilebrequin selon l'une des revendications 2 à 10,
dans lequel les douilles de liaison (13, 14, 15) comportent plusieurs portions cylindriques étagées en diamètre vers l'extérieur - le cas échéant disposées avec excentration les unes par rapport aux autres.

12. Vilebrequin selon l'une des revendications 3 à 11,
dans lequel les douilles de palier (16 ; 17 ; 18) sont formées à partir d'un acier pour roulements à bille ou analogue présentant une résistance à l'allongement qui soit la plus élevée possible.
